# EUROPÄISCHE PATENTSCHRIFT

(11) **EP 3 586 040 B1**
(45) Veröffentlichungstag und Bekanntmachung des Hinweises auf die Patenterteilung: **06.04.2022**
(21) Anmeldenummer: 18707625.2
(22) Anmeldetag: 12.02.2018
(51) Int. Cl.: F16H 57/02, F16H 57/021, F16H 57/031

(54) **ANTRIEB, UMFASSEND EINEN ELEKTROMOTOR UND EIN GETRIEBE, UND VERFAHREN ZUM HERSTELLEN EINES ANTRIEBS**
DRIVE, COMPRISING AN ELECTRIC MOTOR AND A TRANSMISSION, AND METHOD FOR PRODUCING A DRIVE
DISPOSITIF D'ENTRAÎNEMENT COMPRENANT UN MOTEUR ÉLECTRIQUE ET UNE TRANSMISSION ET PROCÉDÉ DE FABRICATION D'UN DISPOSITIF D'ENTRAÎNEMENT

(30) Priorität: 21.02.2017 DE 102017001648
(43) Veröffentlichungstag der Anmeldung: 01.01.2020
(73) Patentinhaber: SEW-EURODRIVE GmbH & Co. KG, 76646 Bruchsal (DE)
(72) Erfinder: DENEFLEH, Roland, 64683 Einhausen (DE); BÜHN, Olivier, 76703 Kraichtal (DE); UNTERBURG, Henning, 76227 Karlsruhe (DE); KERSCHBAUM, Martin, 76139 Karlsruhe (DE)
(86) Internationale Anmeldenummer: PCT/EP2018/025037
(87) Internationale Veröffentlichungsnummer: WO 2018/153549

(56) Entgegenhaltungen:
- DE-A1- 10 319 187
- DE-A1-102012 113 093
- DE-C- 597 364
- US-A- 3 175 283
- US-A- 5 931 585
- US-A1- 2015 349 606

## Beschreibung

Die Erfindung betrifft einen Antrieb, umfassend ein Elektromotor und ein Getriebe, und ein Verfahren zum Herstellen eines Antriebs.

Es ist allgemein bekannt, dass ein elektromotorischer Antrieb einen Elektromotor und ein Getriebe aufweist.

Aus der US 2015 / 0 349 606 A1 ist als nächstliegender Stand der Technik ein Antrieb bekannt.

Aus der GB 2 523 765 A ist ein hydrostatisches Getriebe bekannt.

Aus der JP S60 - 8 571 A ist ein Gehäuse bekannt.

Aus der DE 10 2012 113 093 A1 ist ein Lagerhalter bekannt.

Aus der WO 2015 / 076 722 A1 ist ein Getriebegehäuse bekannt.

Aus der DE 103 19 187 A1 ist eine elektrische Maschine mit Bajonettverbindung bekannt.

Aus der DE 10 2015 009 091 B3 ist eine Anordnung zur Leistungsübertragung und Signalübertragung bei einer aus zwei Einheiten bestehenden Antriebseinrichtung bekannt.

Aus der US 3 514 999 A ist eine schnell lösbare Verbindung bekannt.

Aus der DE 15 00 391 B ist ein kreisrundes Getriebegehäuse bekannt.

Aus der US 2001 /0 011 488 A1 ist ein Reduziergetriebe bekannt.

Aus der DE 10 2007 036 442 A1 ist ein Verfahren zur Herstellung einer Gleitlagerstelle bei einem Gussbauteil bekannt, das als Spannhebel eines Riemenspanners ausgebildet ist.

Aus der DE 102 43 920 B3 ist eine Vorrichtung zur lösbaren Befestigung eines Motors an einem Förderer bekannt.

Aus der US 2015/349 606 A1 ist als nächstliegender Stand der Technik ein Antrieb bekannt.

Aus der DE 103 19 187 A1 ist eine elektrische Maschine mit Bajonettverbindung bekannt.

Aus der US 3 175 283 A ist ein Verfahren zur Herstellung eines Gehäuses für ein Getriebe bekannt.

Aus der DE 10 2012 113 093 A1 ist ein Lagerhalter bekannt.

Aus der DE 597 364 C ist ein Gehäuse für en Untersetzungsgetriebe mit Pfeilverzahnung mit angeflanschtem Motor bekannt.

Aus der US 5 931 585 A ist ein Lagersitz mit reduzierten Dimensionen bekannt.

Der Erfindung liegt daher die Aufgabe zugrunde, einen Antrieb vereinfacht herstellbar weiterzubilden.

Erfindungsgemäß wird die Aufgabe bei dem Antrieb nach den in Anspruch 1 und bei dem Verfahren nach den in Anspruch 12 angegebenen Merkmalen gelöst.

Wichtige Merkmale bei dem Antrieb sind, dass der Antrieb ein Elektromotor und ein Getriebe umfasst,
wobei das Gehäuse des Getriebes ein Gehäuseteil und ein Deckelteil aufweist, insbesondere welche miteinander verbunden sind,
wobei das **Gehäuseteil** Lageraufnahmen aufweist, wobei in jeder Lageraufnahme jeweils ein Lagersitz vorgesehen ist,
insbesondere wobei der jeweilige Lagersitz in Umfangsrichtung unterbrochen ausgeführt ist, wobei an der vom Lagersitz abgewandten Seite, insbesondere Außenseite, des Gehäuseteils ebene, insbesondere zueinander in Flucht liegende, Auflageflächenbereiche ausgeformt sind,
insbesondere also die Auflageflächenbereiche in einer gemeinsamen Ebene vorgesehen sind, insbesondere angeordnet sind.

Von Vorteil ist dabei, dass das Gehäuseteil als Gussteil fertigbar ist, wobei der Rohguss aber entsprechend rau ist.

Durch Einpressen des Stempelwerkzeugs mit seinen zylindrischen Stempeln ist eine präzise Fertigung ermöglicht. Insbesondere ist die relative Positionierung der Lagersitze mit hoher Präzision herstellbar, weil die Stempel in einem Stempelwerkzeug gemeinsam angeordnet sind. Außerdem ist jeder der Lagersitze passgenau herstellbar. Damit das Einpressen stabil erfolgen kann, ist auf der anderen Seite des Gehäuseteils ein stabiles Anlegen einer Arbeitsebene ermöglicht. Hierzu sind die ebenen Außenoberflächenbereiche des Gehäuseteils vorgesehen.

Somit ist eine einfache Herstellung ermöglicht.

Das Deckelteil weist Lageraufnahmen auf, wobei in jeder Lageraufnahme jeweils ein Lagersitz vorgesehen ist,
insbesondere wobei der jeweilige Lagersitz in Umfangsrichtung unterbrochen ausgeführt ist, wobei an der vom Lagersitz abgewandten Seite, insbesondere Außenseite, des Deckelteils ebene, insbesondere zueinander in Flucht liegende, Auflageflächenbereiche ausgeformt sind,
insbesondere also die Auflageflächenbereiche in einer gemeinsamen Ebene vorgesehen sind, insbesondere angeordnet sind. Von Vorteil ist dabei, dass das Deckelteil als Gussteil fertigbar ist, wobei der Rohguss aber entsprechend rau ist.

Durch Einpressen des Stempelwerkzeugs mit seinen zylindrischen Stempeln ist eine präzise Fertigung ermöglicht. Insbesondere ist die relative Positionierung der Lagersitze mit hoher Präzision herstellbar, weil die Stempel in einem Stempelwerkzeug gemeinsam angeordnet sind. Außerdem ist jeder der Lagersitze passgenau herstellbar. Damit das Einpressen stabil erfolgen kann, ist auf der anderen Seite des Deckelteils ein stabiles Anlegen einer Arbeitsebene ermöglicht. Hierzu sind die ebenen Außenoberflächenbereiche des Deckelteils vorgesehen.

Bei einer vorteilhaften Ausgestaltung ist im jeweiligen Lagersitz ein jeweiliges Lager passgenau aufgenommen. Von Vorteil ist dabei, dass eine präzise Lagerung ermöglicht ist.

Der Elektromotor weist eine Rotorwelle und ein Motorgehäuse auf, wobei die Rotorwelle mittels zumindest eines Lagers drehbar gelagert ist im Motorgehäuse,
wobei ein Adapterflansch mit dem Motorgehäuse drehfest verbunden ist
wobei das Gehäuse des Getriebes ein Gehäuseteil und ein Deckelteil aufweist, insbesondere welche miteinander verbunden sind,
wobei am Gehäuseteil ein Bajonettführungsbereich ausgebildet ist,
wobei der Adapterflansch einen Laschenbereich, insbesondere Bajonettnase, aufweist, insbesondere zum Hintergreifen des Bajonettführungsbereichs.

Von Vorteil ist dabei, dass Motor und Getriebe mittels Bajonettverbindung verbindbar sind. Somit ist ein einfaches Herstellen des Antriebs ermöglicht. Außerdem ist auch eine vereinfachte Wartung, insbesondere ein vereinfachtes Austauschen des Motors ermöglicht.

Des Weitere ist die Bajonettverbindung zur Zentrierung des Motors relativ zum Getriebe verwendbar.

Bei einer vorteilhaften Ausgestaltung sind Adapterflansch und Motorflansch einstückig, insbesondere einteilig, miteinander ausgebildet. Von Vorteil ist dabei, dass eine geringere Teilezahl notwendig ist und somit ein geringerer Lagerraum für die Herstellung benötigt wird.

Bei einer vorteilhaften Ausgestaltung ragt der Bajonettführungsbereich in eine Ausnehmung des Gehäuseteils hinein,
wobei der Bajonettführungsbereich einen Radialabstandsbereich überdeckt, welcher von dem von dem Laschenbereich überdeckten Radialabstandsbereich umfasst ist, insbesondere also radial weniger ausgedehnt ist als der Laschenbereich,
wobei der vom Bajonettführungsbereich überdeckte Umfangswinkelbereich kleiner ist als der von der Ausnehmung überdeckte Umfangswinkelbereich,
wobei der von dem Laschenbereich überdeckte Umfangswinkelbereich betragsmäßig kleiner ist als die Differenz des von der Ausnehmung überdeckten Umfangswinkelbereichs und dem von dem Bajonettführungsbereich überdeckten Umfangswinkelbereich,
insbesondere so, dass der Laschenbereich axial in die Ausnehmung einführbar ist und durch Verdrehen den Bajonettführungsbereich hintergreift. Von Vorteil ist dabei, dass der am Adapterflansch ausgeformte Laschenbereich axial einführbar ist in die Ausnehmung, wobei der vom Laschenbereich überdeckte Radialabstandsbereich den vom Bajonettführungsbereich überdeckten Radialabstandsbereich umfasst. Nur weil in dem vom Bajonettführungsbereich überdeckten Radialabstandsbereich der Bajonettführungsbereich in Umfangsrichtung weniger ausgedehnt ist als die Ausnehmung ist der Laschenbereich in die Ausnehmung einführbar und kann somit mit seinem Hinterschnittsbereich den Bajonettführungsabschnitt hintergreifen, wenn der Laschenbereich in Umfangsrichtung gedreht wird. Somit umgreift der Laschenabschnitt den Bajonettführungsbereich, wobei er derart eng anliegt, dass er vom Bajonettführungsbereich beim Drehen in Umfangsrichtung axial verschoben wird. Dies wird mit einer entsprechenden Kontur des Bajonettführungsbereichs bewirkt.

Die axiale Breite des Bajobettführungsbereichs nimmt in Umfangsrichtung zu, insbesondere
- so, dass der am Adapterflansch ausgebildete Laschenbereich bei der Drehung in Umfangsrichtung vom Bajonettführungsbereich axial verschoben wird, insbesondere so, dass die axiale Position proportional zur Drehwinkelstellung des Laschenbereichs ist,
- und/oder so, dass der Adapterflansch beim zum Gehäuseteil relativen Verdrehen des Adapterflansches in Umfangsrichtung zum Gehäuseteil hingedrückt wird.

Von Vorteil ist dabei, dass mittels der zunehmenden Breite ein verbessertes, also engeres, Anliegen des Laschenbereichs am Bajonettführungsabschnitt erreichbar ist und somit eine Führung, insbesondere Verschiebung des Laschenbereichs in axialer Richtung, bewirkt ist.

Bei einer vorteilhaften Ausgestaltung ist die Ausnehmung in Umfangsrichtung begrenzt durch eine Halterippe, welche sich von einer Lageraufnahme des Lagers der eintreibenden Welle in radialer Richtung erstreckt.

Bei einer vorteilhaften Ausgestaltung ist die Ausnehmung entgegen der Umfangsrichtung begrenzt durch eine weitere Halterippe, welche sich von einer Lageraufnahme des Lagers der eintreibenden Welle in radialer Richtung erstreckt,
insbesondere wobei der Bajonettführungsbereich die weitere Halterippe berührt, wobei Bajonettführungsbereich, weitere Halterippe und Lageraufnahme einstückig, insbesondere einteilig, ausgebildet, insbesondere ausgeformt, sind. Von Vorteil ist dabei, dass eine stabile Halterung der Lageraufnahme erreichbar ist. Somit ist die Lageraufnahme selbst sehr dünnwandig, insbesondere ringartig oder hohlzylindrisch, ausführbar. Die Halterippen erstrecken sich zu einem radial weiter außenliegenden Bereich des Gehäuseteils, so dass dieser radial weiter außenliegende Bereich rahmenartig ausgeführt ist und somit die Stabilität verbesserte ist. Der rahmenartige Bereich muss nicht rein rechteckförmig ausgeformt sein, sondern darf auch teilweise mit Material gefüllt sein, so dass die Stabilität weiter verbessert ist.

Bei einer vorteilhaften Ausgestaltung ist am Boden der topfförmig ausgeformten Lageraufnahme zwischen Lageraufnahme und dem darin aufgenommenen Lager eine elastisch verformte Dichtung angeordnet,
wobei am Boden der Lageraufnahme Stegbereiche axial hervorragen, an welchen das Lager anliegt, so dass die Verformung der Dichtung mittels der Stegbereiche begrenzt ist,
wobei die elastisch verformte Dichtung das Lager gegen eine an der eintreibenden Welle ausgeformte Stufe drückt,
insbesondere wobei die eintreibende Welle mittels des Lagers relativ zur Lageraufnahme drehbar gelagert ist. Von Vorteil ist dabei, dass die Dichtung einerseits das Lager gegen eine Stufe der Welle drückt und andererseits als Dichtung verwendbar ist. Dabei ist wichtig, dass das Andrücken mittels der Stegbereiche begrenzt ist und somit keine übergroßen Anpresskräfte erzeugbar sind.

Bei einer vorteilhaften Ausgestaltung weist das Deckelteil ebenfalls topfförmig ausgeformte Lageraufnahmen auf,
wobei Halterippen von der jeweiligen Lageraufnahme zu einem umlaufenden Randbereich des Deckelteils sich erstrecken,
wobei am jeweiligen Boden der topfförmigen Lageraufnahme axial hervorragende Stegbereiche ausgeformt sind, welche die elastische Verformung einer jeweiligen Dichtung begrenzen,
insbesondere wobei die jeweilige Dichtung das jeweilige Lager auf eine jeweilige an der jeweiligen Welle ausgebildete Stufe drückt. Von Vorteil ist dabei, dass die Dichtung einerseits abdichtet und andererseits das Lager axial sichert und andrückt gegen eine Stufe der vom Lager gelagerten Welle.

Bei einer vorteilhaften Ausgestaltung ist in einer Ausnehmung des Gehäuseteils ein am Gehäuseteil abgestützter Bolzen angeordnet, welcher von einem Federelement insbesondere axial zum Adapterflansch gedrückt wird, insbesondere zur Arretierung. Von Vorteil ist dabei, dass eine Arretierung der Bajonettverbindung in einfacher Weise erreichbar ist. Somit ist ein einfaches Verbinden mittels Bajonettverbindung ermöglicht und ein selbsttätiges Lösen der Bajonettverbindung verhindert.

Bei einer vorteilhaften Ausgestaltung ist in einer Ausnehmung des Adapterflansches ein am Adapterflansch abgestützter Bolzen angeordnet, welcher von einem Federelement insbesondere axial zum Gehäuseteil gedrückt wird, insbesondere zur Arretierung. Von Vorteil ist dabei, dass eine Arretierung der Bajonettverbindung in einfacher Weise erreichbar ist. Somit ist ein einfaches Verbinden mittels Bajonettverbindung ermöglicht und ein selbsttätiges Lösen der Bajonettverbindung verhindert.

Bei einer vorteilhaften Ausgestaltung sind zum Gehäuseteil hin axial hervorragende Stegbereiche am Adapterflansch ausgeformt, welche jeweils in eine jeweilige Ringnut des Gehäuseteils hineinragen und somit als Führung bei der Verdrehbewegung des Adapterflansches relativ zum Gehäuseteil wirksam sind,
wobei der vom jeweiligen Stegbereich überdeckte Radialabstandsbereich unabhängig vom Umfangswinkel ist,
insbesondere wobei der jeweilige Stegbereich sich in Umfangsrichtung erstreckt,
insbesondere wobei die Stegbereiche zwar auf demselben Radialabstand angeordnet sind, aber voneinander in Umfangsrichtung beabstandet sind. Von Vorteil ist dabei, dass eine einfache Herstellung einer Zentrierung und Führung erreichbar ist. Insbesondere ist eine Ringnut verwendbar, in welche die Stegbereiche hineinragen und somit als Führung fungieren. Von Vorteil ist dabei, dass eine Führung und Zentrierung mittels der Stegbereiche in einfacher Weise erreichbar ist. Denn die Stegbereiche sind kreisabschnittweise am Adapterflansch ausgeformt und ragen teilweise in eine am Gehäuseteil ausgebildete Ringnut hinein, so dass eine Führung beim Betätigen der Bajonettverbindung bewirkt ist, also beim Verdrehen des Adapterflansches relativ zum Gehäuseteil.

Wichtige Merkmale bei dem Verfahren zum Herstellen eines Antriebs sind, dass in einem ersten Verfahrensschritt das Gehäuseteil durch Gießen hergestellt wird,
in einem zweiten Verfahrensschritt ein Stempelwerkzeug in Lageraufnahmen des Gehäuseteils eingepresst wird, so dass Lagersitze passgenau hergestellt werden, insbesondere wobei das Stempelwerkzeug mindestens zwei Stempel aufweist, wobei jeder der Stempel zur Ausformung eines jeweiligen Lagersitzes vorgesehen ist,
insbesondere wobei in einem dritten Verfahrensschritt im jeweiligen Lagersitz jeweils ein Lager aufgenommen wird.

Von Vorteil ist dabei, dass eine einfache Herstellung durch Gießen verwendbar ist und durch Einpressen des Stempelwerkzeugs die Lagersitze hochpräzise anordenbar und fertigbar sind.

Bei einer vorteilhaften Ausgestaltung wird in einem ersten Herstellverfahrensschritt das Deckelteil durch Gießen hergestellt,
in einem zweiten Herstellverfahrensschritt ein Stempelwerkzeug in Lageraufnahmen des Deckelteils eingepresst wird, so dass Lagersitze passgenau hergestellt werden, insbesondere
wobei das Stempelwerkzeug mindestens zwei Stempel aufweist, wobei jeder der Stempel zur Ausformung eines jeweiligen Lagersitzes vorgesehen ist,
insbesondere wobei in einem dritten Herstellverfahrensschritt im jeweiligen Lagersitz jeweils ein Lager aufgenommen wird. Von Vorteil ist dabei, dass das Deckelteil ebenso wie das Gehäuseteil mit präzise gefertigten Lagersitzen ausstattbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

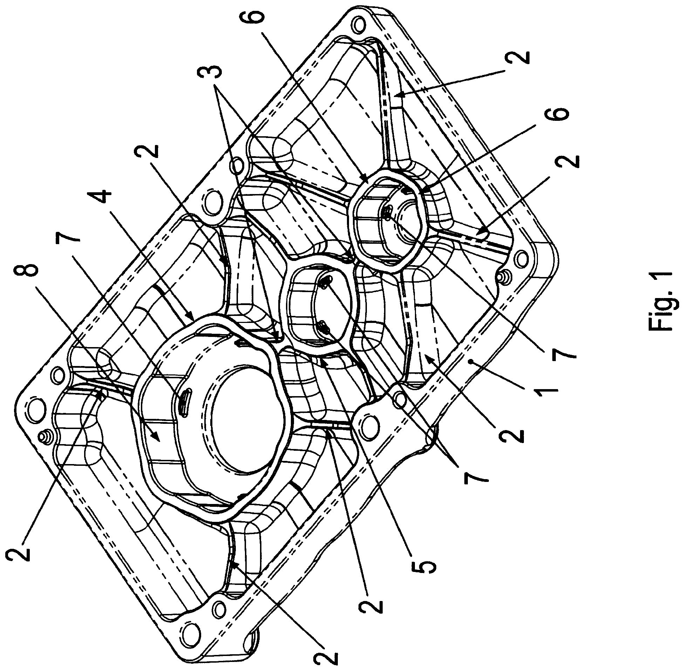

In der Figur 1 ist eine Schrägansicht eines Deckelteils 1 des erfindungsgemäßen Antriebs aus einer ersten Blickrichtung dargestellt.

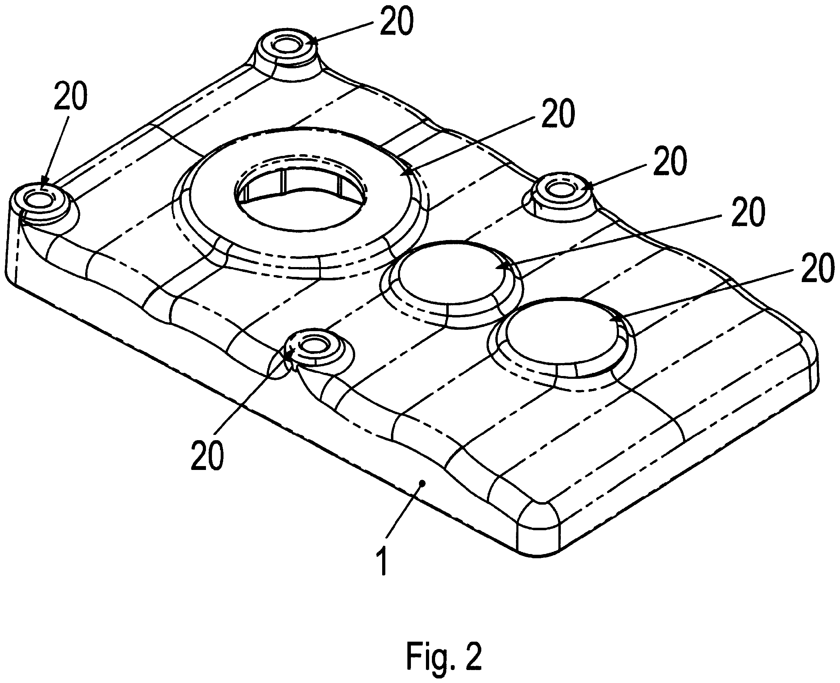

In der Figur 2 ist eine Schrägansicht des Deckelteils 1 aus einer anderen Blickrichtung dargestellt.
In der Figur 3 ist eine Seitenansicht des Deckelteils 1 dargestellt.

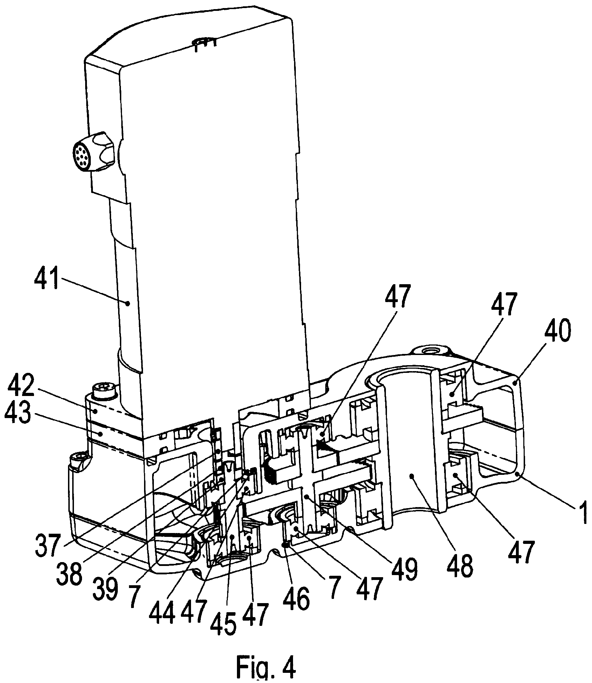

In der Figur 4 ist der Antrieb angeschnitten in Schrägansicht dargestellt.

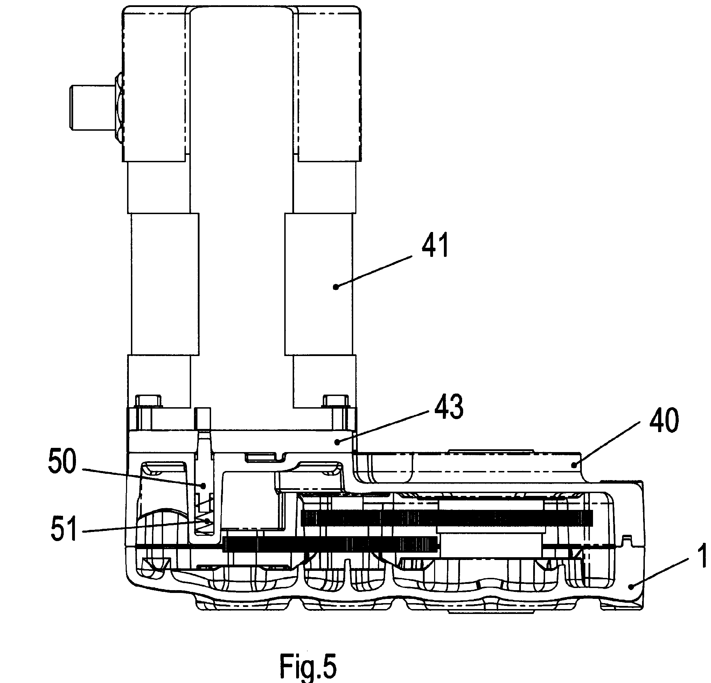

In der Figur 5 ist eine Schnittansicht des Antriebs dargestellt, wobei ein Bolzen 50 zur Arretierung sichtbar ist.
In der Figur 6 ist eine Schrägansicht eines Gehäuseteils 40 des Antriebs in Schrägansicht dargestellt.

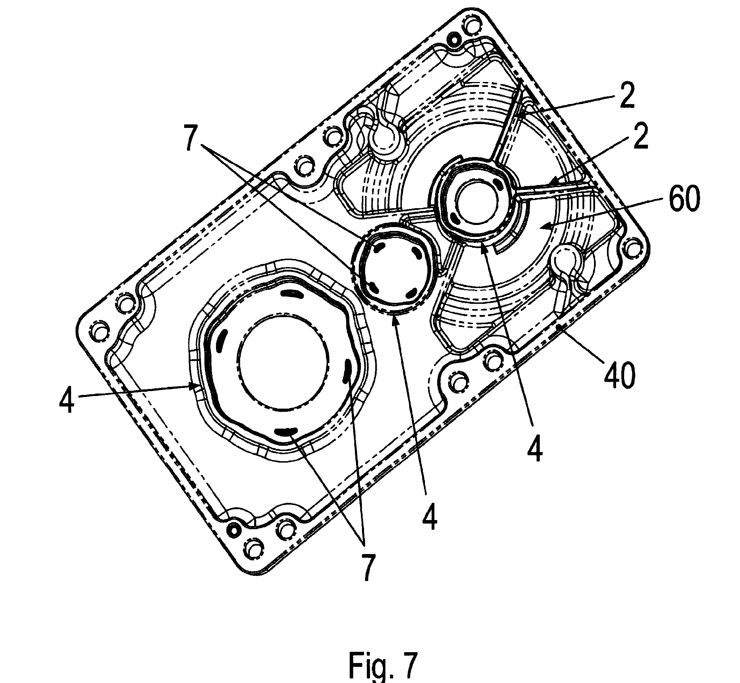

In der Figur 7 ist das Gehäuseteil 40 in einer Schrägansicht in einer anderen Blickrichtung gezeigt.
In der Figur 8 ist der Antrieb, aufweisend Getriebe und Elektromotor, in Schrägansicht gezeigt.

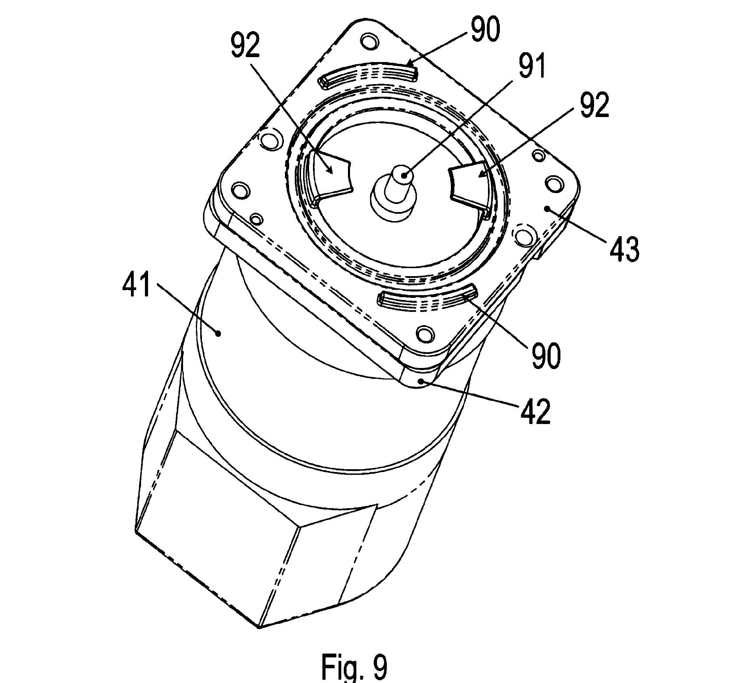

In der Figur 9 ist der Elektromotor des Antriebs in Schrägansicht dargestellt.

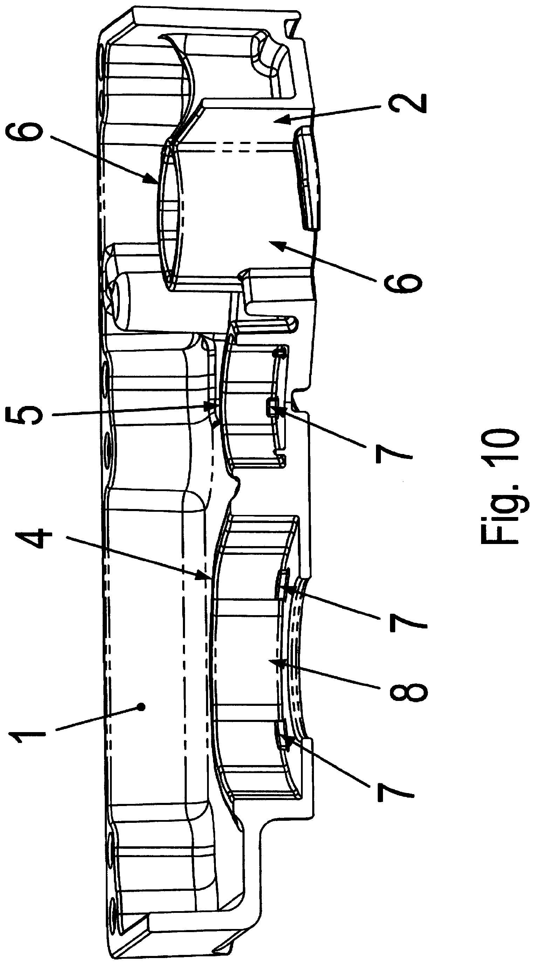

In der Figur 10 ist das Gehäuseteil 40 angeschnitten und in Schrägansicht dargestellt, wobei die Blickrichtung beinahe der Blickrichtung einer Seitenansicht entspricht.

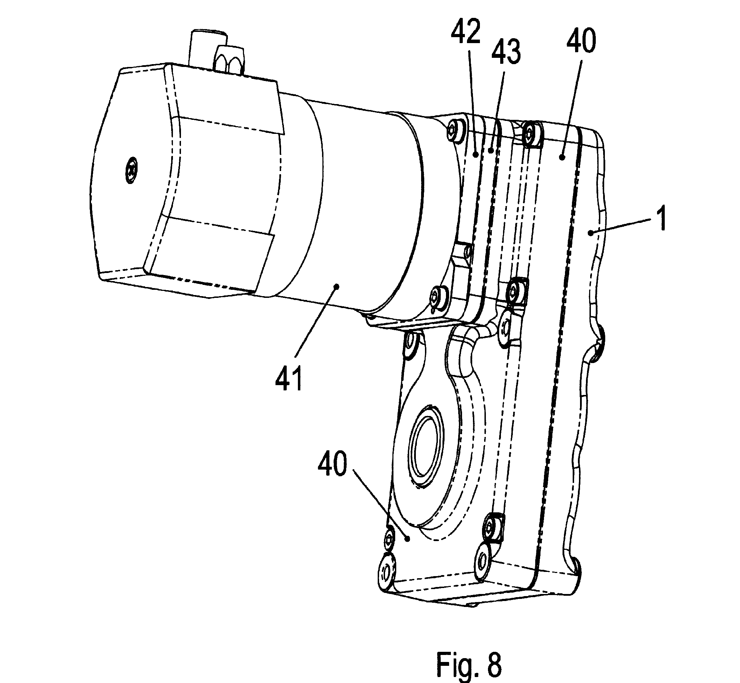

Wie in Figur 8 dargestellt, weist der Antrieb ein von einem Elektromotor angetriebenes Getriebe auf.

Wie in den Figuren dargestellt, weist dabei der Elektromotor ein Motorgehäuse 41 auf, welches mit einem Motorflansch 42 verbunden ist, welches mit dem Adapterflansch 43 verbunden ist.

Das Gehäuse des Getriebes weist ein Gehäuseteil 40 auf und ein mit dem Gehäuseteil 40 dicht verbundenes Deckelteil 1.

Der Adapterflansch 43 ist mit dem Gehäuseteil 40 verbunden, wobei hier eine Bajonettverbindung verwendet ist.

Im Motorgehäuse 41 ist der Stator des Elektromotors aufgenommen und Lager zur Lagerung einer Rotorwelle des Elektromotors. Die Rotorwelle ist mittels einer Kupplung mit der eintreibenden Welle 45 des Getriebes drehfest verbunden. Hierzu weist die Kupplung ein erstes Kupplungsteil 37 auf, welches Drehfest mit der Rotorwelle verbunden ist, ein Zwischenteil 38, welches vorzugsweise aus einem Kunststoff oder Elastomer gefertigt ist, und ein zweites Kupplungsteil 39, welches drehfest mit der eintreibenden Welle 45 verbunden ist.

Erstes Kupplungsteil 37 und zweites Kupplungsteil 39 sind vorzugsweise jeweils aus Metall ausbildbar, wobei das Zwischenteil 38 aus einem weniger harten Material ausbildbar sind.

Die Kupplung ist vorzugsweise nach Art einer Klauenkupplung aufgebaut. Daher ist in Umfangsrichtung zwischen den beiden Kupplungsteilen (37, 39) das Zwischenteil 38 angeordnet. Somit sind Drehmomentstöße abdämpfbar.

Mit der eintreibenden Welle ist ein erstes Zahnrad drehfest verbunden, das im Eingriff steht mit einem weiteren Zahnrad, das mit einer Zwischenwelle 49 drehfest verbunden ist. Ein drittes Zahnrad ist ebenfalls mit der Zwischenwelle 49 drehfest verbunden, welches im Eingriff ist mit einem mit der abtreibenden Welle 48 drehfest verbundenen Zahnrad.

Jede Welle ist über Lager 47 drehbar gelagert, welche jeweils entweder im Deckelteil 1 oder im Gehäuseteil 40 aufgenommen sind.

Zur Aufnahme des jeweiligen Lagers 47 ist am Gehäuseteil 40 beziehungsweise am Deckelteil 1 jeweils eine Lageraufnahme (4, 5, 6) ausgeformt. Die Wandung der jeweiligen Lageraufnahme (4, 5, 6) ist dünnwandig ausgeführt und umgibt das Lager in jeweiliger Umfangsrichtung vollständig. Die Lageraufnahme (4, 5, 6) überdeckt in axialer Richtung jeweils einen axialen Bereich, welcher den vom jeweils aufgenommenen Lager 47 in axialer Richtung überdeckten axialen Bereich umfasst.

Die Lageraufnahmen (4, 5, 6) sind jeweils einstückig, insbesondere einteilig, entweder am Gehäuseteil 40 oder am Deckelteil 1 ausgeformt.

An der Innenwandung der jeweiligen Lageraufnahme (4, 5, 6) mittels eines Formwerkzeugs ist ein zylindrischer Raumbereich bereitgestellt, in welchem das jeweilige Lager 47 aufgenommen ist und anliegt. In denjenigen Umfangswinkelbereichen, in welchen der von der Lageraufnahme (4, 5, 6) umfasste Bereich radial weiter ausgedehnt ist, ist die Berührfläche zwischen Lageraufnahme (4, 5, 6) und Lager 47 unterbrochen.

Zwischen Gehäuseteil 40 und jeweils in einer am Gehäuseteil 40 ausgeformten Lageraufnahme (4, 5, 6) ist eine Dichtung angeordnet, welche das Lager 47 gegen eine an der von diesem jeweiligen Lager 47 gelagerten Welle ausgebildete Stufe drückt. Hierzu wird die Dichtung elastisch verformt, wobei diese Verformung durch jeweilige Stegbereiche 7 begrenzt wird, welche am Gehäuseteil 40 ausgeformt sind.

Die Stegbereiche 7, welche am Gehäuseteil 40 ausgeformt sind und jeweils dasselbe Lager 47 berühren, sind auf gleichem Radialabstand zur Drehachse der von diesem Lager 47 gelagerten Welle angeordnet. In Umfangsrichtung sind die Stegbereiche 7 dieses jeweiligen Lagers 47 voneinander beabstandet, insbesondere regelmäßig.

Die Lageraufnahmen (4, 5, 6) kragen aus dem restlichen Gehäuseteil 40 beziehungsweise Deckelteil 1 axial hervor.

Dieses restliche Deckelteil 1 ist wannenförmig ausgeführt und weist dabei einen Bodenbereich auf, aus dem die Lageraufnahmen (4, 5, 6) hervorragen.

Am restlichen Deckelteil 1 ist ein äußerer, umlaufender Randbereich angeordnet, der einen axialen Bereich überdeckt, welcher auch von den Lageraufnahmen (4, 5, 6) überdeckt wird.

Vier, in Umfangsrichtung voneinander beabstandete Halterippen 2 erstrecken sich von diesem Randbereich bis zu der Lageraufnahme 4, welche für die Aufnahme des Lagers 47 der abtreibenden Welle 48 vorgesehen ist. Der Abstand der Halterippen 2 in Umfangsrichtung ist nicht regelmäßig. Somit sind Resonanzschwingungen reduzierbar.

Eine Verbindungsrippe 3 ist von den Halterippen 2 der Lageraufnahme 4, welche für die Aufnahme des Lagers 47 der Zwischenwelle 49 vorgesehen ist, beabstandet und erstreckt sich von der Lageraufnahme 4 zu der benachbarten Lageraufnahme 5.

Zwei weitere Halterippen 2 sind am Deckelteil 1 ausgeformt, welche sich von der Lageraufnahme 5 bis zum Randbereich des Deckelteils 1 erstrecken.

Die Lageraufnahme 6 des Lagers 47 der eintreibenden Welle 45 ist ebenfalls mittels vier Halterippen 2 stabilisiert, welche sich jeweils von der Lageraufnahme 6 zum Randbereich des Deckelteils 1 erstrecken und in Umfangsrichtung voneinander beabstandet sind.

Außerdem ist eine weitere Verbindungrippe 3 vorgesehen, welche sich von der Lageraufnahme 5 zur Lageraufnahme 6 erstreckt.

Zwischen dem jeweils aufgenommenen Lager 47 und dem Deckelteil 1, insbesondere dem Bodenbereich des Deckelteils 1, ist eine Dichtung angeordnet, welche in axialer Richtung auf das jeweilige Lager 47 drückt, so dass dieses an einer Stufe der jeweils durch das jeweilige Lager 47 gelagerten Welle angedrückt ist. Die elastische Verformung der Dichtung ist durch die am Deckelteil 1, insbesondere am Bodenbereich, ausgeformten Stegbereiche 7 begrenzt.

Somit ist das jeweilige Lager 47 mittels der jeweiligen Dichtung 46 angedrückt und abgedichtet.

Das Deckelteil 1 ist mit dem Gehäuseteil 40 schraubverbunden und mittels einer zwischengeordneten Dichtung abgedichtet, also dicht verbunden.

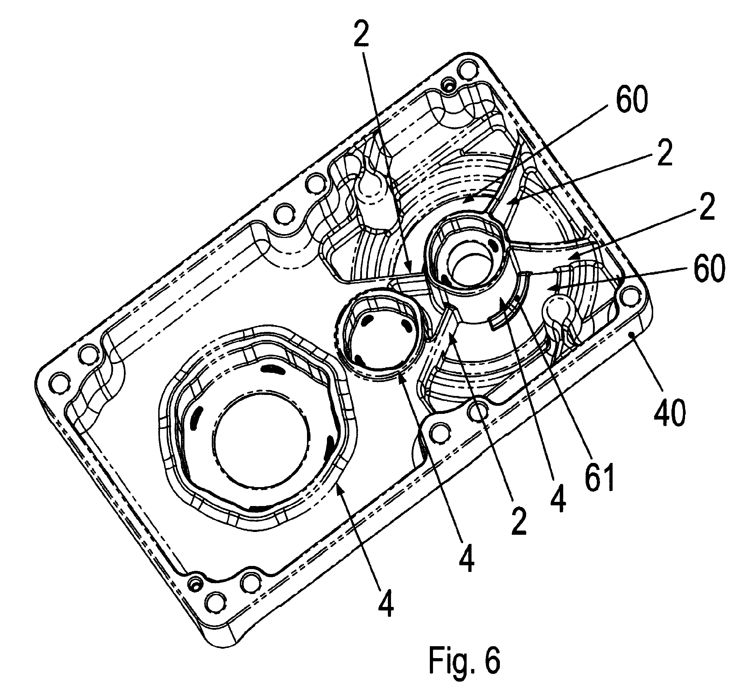

Wie in Figur 6 gezeigt, weist das Gehäuseteil 40 ebenfalls einen außen umlaufenden Randbereich auf. Für die eintreibende Welle 45 weist das Gehäuseteil 40 eine Lageraufnahme 4 auf, welche ein Lager der eintreibenden Welle 45 aufnimmt. Vier in Umfangsrichtung voneinander beabstandete Halterippen 2 erstrecken sich jeweils von dem Randbereich zur Lageraufnahme 4, insbesondere so dass diese stabilisiert ist, insbesondere gegen Schwingungen und/oder über die eintreibende Welle 45 eingeleitete Querkräfte.

Dieser Randbereich überdeckt einen axialen Bereich, welcher den vom im Gehäuseteil 40 aufgenommenen Lager der eintreibenden Welle 45 überdeckten axialen Bereich umfasst.

Der Bodenbereich des Gehäuseteils 40 weist eine erste und eine zweite Ausnehmung 60 auf, die zur Einführung von Laschenbereichen 92, insbesondere Bajonettnasen, vorgesehen sind.

In Umfangsrichtung ist die erste Ausnehmung 60 durch eine erste der Halterippen 2 begrenzt. Entgegen der Umfangsrichtung ist die zweite Ausnehmung 60 durch eine zweite der Halterippen 2 begrenzt.

Die andere Ausnehmung 60 ist durch die beiden anderen Halterippen 2 in Umfangsrichtung beziehungsweise entgegen der Umfangsrichtung begrenzt.

Von der Lagerausnehmung 4 ragt ein erster Bajonettführungsbereich 61 radial hervor, insbesondere in die Ausnehmung 60. Der erste Bajonettführungsbereich 61 erstreckt sich über einen geringeren Umfangswinkelbereich als die Ausnehmung 60 und ist radial weniger weit ausgedehnt als die Ausnehmung 60.

Von der Lagerausnehmung 4 ragt auch ein zweiter Bajonettführungsbereich 61 radial hervor, insbesondere in die andere Ausnehmung 60. Der zweite Bajonettführungsbereich 61 erstreckt sich ebenfalls über einen geringeren Umfangswinkelbereich als die zweite Ausnehmung 60 und ist radial ebenfalls weniger weit ausgedehnt als die zweite Ausnehmung 60.

Am adapterflansch 43 ist eine mittig angeordnete Ausnehmung ausgeformt, wobei voneinander in Umfangsrichtung beabstandete Laschenbereiche 92 nach radial innen in die Ausnehmung hervorragen.

In Umfangsrichtung ist jeder der beiden Laschenbereiche 92 weniger ausgedehnt als die Differenz der Ausdehnung der Ausnehmung 60 in Umfangsrichtung und der Ausdehnung des Bajonettführungsbereichs 61.

Somit ist beim Ansetzen des Adapterflansches 43 an das Gehäuseteil 40 der jeweilige Laschenbereich 92 in den in Umfangsrichtung vorhandenen Freiraum zwischen der Begrenzung der Ausnehmung 60, also der ersten Halterippe 2, und dem Bajonettführungsbereich 61 einführbar und durch relatives Verdrehen des Adapterflansches als Hintergriff hinter den Bajonettführungsbereich 61 wirksam wird.

Der Bajonettführungsbereich weist eine in Umfangsrichtung zunehmende axiale Position auf, so dass beim relativen Verdrehen der Adapterflansch 43 immer näher oder stärker auf das Gehäuseteil 40 gedrückt wird. Die Verdrehbewegung ist begrenzt einerseits durch das Anliegen des Adapterflansches 43 an dem Gehäuseteil 40 und andererseits auch durch die zweite Halterippe 2, welche die Verdrehbewegung in Umfangsrichtung begrenzt.

Vorzugsweise nimmt die axiale Wandstärke des Bajonettführungsbereichs 61 in Umfangsrichtung zu, so dass der hintergreifende Laschenbereich 92 immer weiter in axiale Richtung verschoben wird und somit der Adapterflansch 43 an das Gehäuseteil 40 angedrückt wird.

Zur Arretierung ist ein Bolzen 50 in einem am Gehäuseteil 40 ausgeformten Sackloch geführt, welcher von einem Federelement 51, welches am Boden des Sacklochs abgestützt ist, zum Adapterflansch 43 hingedrückt wird.

Sobald bei der Verdrehbewegung eine im Adapterflansch 43 eingebrachte Ausnehmung in Flucht mit dem Sackloch des Gehäuseteils 40 kommt, wird daher der Bolzen 50 vom Federelement 51 in die Ausnehmung teilweise hineingedrückt. Somit ragt dann der axial ausgerichtete Bolzen 50 mit seinem aus dem Gehäuseteil 40 hervorragenden Bereich in die Ausnehmung des Adapterflansches 43 hinein, wodurch die Verdrehbewegung arretiert wird.

Am Adapterflansch 43 sind axial zum Gehäuseteil 40 hervorragende Stegbereiche 90 ausgeformt, welche in eine Ringnut des Gehäuseteils 40 hineinragen und somit als Führung bei der Verdrehbewegung wirksam sind. Der jeweilige Stegbereich 90 erstreckt sich in Umfangsrichtung, wobei die Stegbereiche zwar auf demselben Radialabstand angeordnet sind, aber voneinander in Umfangsrichtung beabstandet.

Jede der Wellen (45, 48, 49) ist über zwei Lager gelagert, wobei jedes der Lager von einer Dichtung (44, 46) axial beaufschlagt wird, so dass die Lager gegeneinander vorgespannt sind. Hierbei ist ein erstes der Lager einer ersten Welle der Wellen (45, 48, 49) im Deckelteil 1 und das andere Lager dieser ersten Welle im Gehäuseteil 40 aufgenommen. Die erste Dichtung ist im Deckelteil 1 aufgenommen und drückt gegen das erste Lager der ersten Welle. Die zweite Dichtung ist im Gehäuseteil 40 aufgenommen und drückt gegen das zweite Lager der ersten Welle. Somit wird das erste Lager von der ersten Dichtung gegen eine erste Stufe an der ersten Welle gedrückt und das zweite Lager von der zweiten Dichtung gegen eine zweite Stufe der ersten Welle gedrückt. Somit sind die Lager gegeneinander verspannt angeordnet. Die Dichtungen sind jeweils als O-Ring oder als Flachdichtung ausführbar.

Zur Herstellung präzise gefertigter Lagersitze für die aufgenommenen Lager aller Wellen des Getriebes wird nach dem Herstellen mittels Gießen ein Verformwerkzeug eingesetzt.

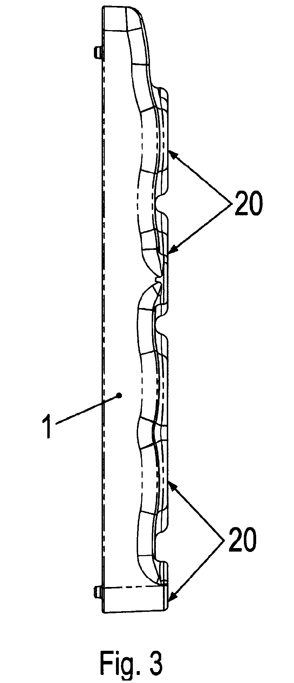

Das Deckelteil 1 wird also in einem ersten Herstellverfahrensschritt als Gussteil hergestellt. Danach wird das Deckelteil 1 mit seiner Außenseite, also mit der beim später hergestellten Antrieb vom Motor abgewandten Seite, auf eine ebene Fläche aufgelegt. Hierzu weist das Deckelteil 1, wie in Figur 3 dargestellt, plane, also ebene Auflageflächenbereiche 20 auf. Somit liegt das Deckelteil 1 stabil auf der ebenen Fläche, beispielsweise ein Arbeitstisch, auf. Danach wird als Formwerkzeug ein Stempel in jede der Lageraufnahmen eingepresst, wobei der Stempel zylindrisch geformt ist. Auf diese Weise werden die Lagersitze in den Lageraufnahmen auf Passungsmaß gebracht. Vorzugsweise werden die Stempel für die Lageraufnahmen synchron eingepresst. Somit ist die relative Lage und Ausrichtung der Lagersitze mit hoher Genauigkeit gewährleistbar. Ein Verkippen des Deckelteils 1 beim Einpressen des Stempelwerkzeugs ist somit verhindert.

Auf diese Weise sind also zylindrische Abschnitte 8 der Wandung der jeweiligen Lageraufnahme passgenau fertigbar. Allerdings sind diese Abschnitte nicht zusammenhängend gefertigt, sondern in Umfangsrichtung voneinander beabstandet. Somit wechseln die zylindrischen Abschnitte der Wandung der jeweiligen Lageraufnahme ab mit jeweils benachbarten Abschnitten, welche radial weiter ausgedehnt sind.

Das beschrieben Verfahren zur Fertigung passgenauer Lagersitze wird auch beim Gehäuseteil 40 ausgeführt. Hierzu weist dieses Gehäuseteil 40 auf der dem Motor zugewandten Seite ebene Flächenabschnitte auf, so dass es stabil auf einer ebenen Fläche auflegbar und die Stempelwerkzeuge zur passgenauen Herstellung der Lagersitze synchron in die Lageraufnahmen einpressbar sind. Ein Verkippen des Gehäuseteils 40 beim Einpressen des Stempelwerkzeugs ist somit verhindert. Somit sind die Lagersitze relativ zueinander hochgenau ausgerichtet und auch von ihrer jeweiligen Form her passgenau gefertigt.

Bei einem weiteren erfindungsgemäßen Ausführungsbeispiel sind Adapterflansch 43 und Motorflansch 42 einstückig, also einteilig, miteinander ausbildbar.

### Bezugszeichenliste

1 Deckelteil
2 Halterippe
3 Verbindungsrippe
4 Lageraufnahme
5 Lageraufnahme
6 Lageraufnahme
7 Stegbereich
8 zylindrischer Abschnitt der Wandung der Lageraufnahme 4
20 Auflageflächenbereich
37 erstes Kupplungsteil
38 Zwischenteil
39 zweites Kupplungsteil
40 Gehäuseteil
41 Motorgehäuse
42 Motorflansch
43 Adapterflansch
44 Dichtung
45 eintreibende Welle
46 Dichtung
47 Lager
48 abtreibende Welle
49 Zwischenwelle
50 Bolzen
51 Federelement
60 Ausnehmung für Bajonettnase
61 Bajonettführungsbereich
90 Stegbereich
91 Rotorwelle
92 Laschenbereich, insbesondere Bajonettnase

## Patentansprüche

1. Antrieb, umfassend einen Elektromotor und ein Getriebe,
wobei das Gehäuse des Getriebes ein Gehäuseteil (40) und ein Deckelteil (1) aufweist, insbesondere welche miteinander verbunden sind,
**wobei** das Gehäuseteil (40) Lageraufnahmen (4, 5, 6) aufweist, wobei in jeder Lageraufnahme (4, 5, 6) jeweils ein Lagersitz vorgesehen ist,
**wobei** an der vom Lagersitz abgewandten Seite, **also** Außenseite, des Gehäuseteils (40) ebene, zueinander in Flucht liegende, Auflageflächenbereiche (20) ausgeformt sind,
wobei die Auflageflächenbereiche (20) in einer gemeinsamen Ebene angeordnet sind,
wobei das Gehäuseteil (40) ein Gussteil ist,
wobei der Elektromotor eine Rotorwelle (91) und ein Motorgehäuse (41) aufweist,
wobei die Rotorwelle (91) mittels zumindest eines Lagers (47) drehbar gelagert ist im Motorgehäuse (41),
wobei ein Adapterflansch (43) mit dem Motorgehäuse (41) drehfest verbunden ist,
**dadurch gekennzeichnet, dass**
der jeweilige Lagersitz in Umfangsrichtung unterbrochen ausgeführt ist,
wobei am Gehäuseteil (40) ein Bajonettführungsbereich (61) ausgebildet ist,
wobei die axiale Breite des Bajonettführungsbereichs (61) in Umfangsrichtung zunimmt,
wobei der Adapterflansch (43) einen Laschenbereich (92), insbesondere Bajonettnase, zum Hintergreifen des Bajonettführungsbereichs (61) aufweist.

2. Antrieb nach Anspruch 1,
**dadurch gekennzeichnet, dass**
das **Deckelteil (1)** Lageraufnahmen (4, 5, 6) aufweist, wobei in jeder Lageraufnahme (4, 5, 6) jeweils ein Lagersitz vorgesehen ist,
wobei an der vom Lagersitz abgewandten Seite, des Deckelteils (1) ebene, Auflageflächenbereiche (20) ausgeformt sind.

3. Antrieb nach Anspruch 1 oder 2,
**dadurch gekennzeichnet, dass**
im jeweiligen Lagersitz ein jeweiliges Lager (47) passgenau aufgenommen ist.

4. Antrieb nach mindestens einem der vorangegangenen Ansprüche,
**dadurch gekennzeichnet, dass**
der Bajonettführungsbereich (61) in eine Ausnehmung (60) des Gehäuseteils (40) hineinragt, wobei der Bajonettführungsbereich (61) einen Radialabstandsbereich überdeckt, welcher von dem von dem Laschenbereich (92) überdeckten Radialabstandsbereich umfasst ist,
wobei der vom Bajonettführungsbereich (61) überdeckte Umfangswinkelbereich kleiner ist als der von der Ausnehmung (60) überdeckte Umfangswinkelbereich,
wobei der von dem Laschenbereich (92) überdeckte Umfangswinkelbereich betragsmäßig kleiner ist als die Differenz des von der Ausnehmung (60) überdeckten Umfangswinkelbereichs und dem von dem Bajonettführungsbereich (61) überdeckten Umfangswinkelbereich.

5. Antrieb nach Anspruch 4,
**dadurch gekennzeichnet, dass**
der Laschenbereich (92) axial in die Ausnehmung (60) einführbar ist und durch Verdrehen den Bajonettführungsbereich (61) hintergreift.

6. Antrieb nach mindestens einem der vorangegangenen Ansprüche,
**dadurch gekennzeichnet, dass**
die axiale Breite des Bajonettführungsbereichs (61) in Umfangsrichtung zunimmt,
- so, dass der am Adapterflansch (43) ausgebildete Laschenbereich (92) bei der Drehung in Umfangsrichtung vom Bajonettführungsbereich (61) axial verschoben wird,
- so, dass der Adapterflansch (43) beim zum Gehäuseteil (40) relativen Verdrehen des Adapterflansches (43) in Umfangsrichtung zum Gehäuseteil (40) hingedrückt wird.

7. Antrieb nach mindestens einem der vorangegangenen Ansprüche,
**dadurch gekennzeichnet, dass**
die Ausnehmung (60) in Umfangsrichtung begrenzt ist durch eine Halterippe (2), welche sich von einer Lageraufnahme (4, 5, 6) des Lagers (47) der eintreibenden Welle in radialer Richtung erstreckt,
oder dass
die Ausnehmung (60) entgegen der Umfangsrichtung begrenzt ist durch eine weitere Halterippe (2), welche sich von einer Lageraufnahme (4, 5, 6) des Lagers (47) der eintreibenden Welle in radialer Richtung erstreckt,
wobei Bajonettführungsbereich (61), weitere Halterippe (2) und Lageraufnahme (4, 5, 6) einstückig, ausgebildet, sind.

8. Antrieb nach mindestens einem der vorangegangenen Ansprüche,
**dadurch gekennzeichnet, dass**
am Boden der topfförmig ausgeformten Lageraufnahme (4, 5, 6) zwischen Lageraufnahme (4, 5, 6) und dem darin aufgenommenen Lager (47) eine elastisch verformte Dichtung angeordnet ist,
wobei am Boden der Lageraufnahme (4, 5, 6) Stegbereiche (7, 90) axial hervorragen, an welchen das Lager (47) anliegt, so dass die Verformung der Dichtung mittels der Stegbereiche (7, 90) begrenzt ist,
wobei die elastisch verformte Dichtung das Lager (47) gegen eine an der eintreibenden Welle ausgeformte Stufe drückt.

9. Antrieb nach mindestens einem der vorangegangenen Ansprüche,
**dadurch gekennzeichnet, dass**
das Deckelteil (1) ebenfalls topfförmig ausgeformte Lageraufnahmen (4, 5, 6) aufweist,
wobei Halterippen von der jeweiligen Lageraufnahme (4, 5, 6) zu einem umlaufenden Randbereich des Deckelteils (1) sich erstrecken,
wobei am jeweiligen Boden der topfförmigen Lageraufnahme (4, 5, 6) axial hervorragende Stegbereiche (7, 90) ausgeformt sind, welche die elastische Verformung einer jeweiligen Dichtung begrenzen.

10. Antrieb nach mindestens einem der vorangegangenen Ansprüche,
**dadurch gekennzeichnet, dass**
in einer Ausnehmung (60) des Gehäuseteils (40) ein am Gehäuseteil (40) abgestützter Bolzen angeordnet ist, welcher von einem Federelement zum Adapterflansch (43) gedrückt wird,
oder dass
in einer Ausnehmung (60) des Adapterflansches (43) ein am Adapterflansch (43) abgestützter Bolzen angeordnet ist, welcher von einem Federelement zum Gehäuseteil (40) gedrückt wird.

11. Antrieb nach mindestens einem der vorangegangenen Ansprüche,
**dadurch gekennzeichnet, dass**
zum Gehäuseteil (40) hin axial hervorragende Stegbereiche (7, 90) am Adapterflansch (43) ausgeformt sind, welche jeweils in eine jeweilige Ringnut des Gehäuseteils (40) hineinragen und somit als Führung bei der Verdrehbewegung des Adapterflansches (43) relativ zum Gehäuseteil (40) wirksam sind,
wobei der vom jeweiligen Stegbereich (7, 90) überdeckte Radialabstandsbereich unabhängig vom Umfangswinkel ist.

12. Verfahren zum Herstellen eines Antriebs, nach mindestens einem der vorangegangenen Ansprüche,
**wobei der Antrieb ein Getriebe mit einem Gehäuseteil (40) und einem Deckelteil (1) aufweist,**
in einem ersten Verfahrensschritt das Gehäuseteil (40) durch Gießen hergestellt wird,
**dadurch gekennzeichnet, dass**
in einem zweiten Verfahrensschritt ein Stempelwerkzeug in Lageraufnahmen (4, 5, 6) des Gehäuseteils (40) eingepresst wird, so dass Lagersitze passgenau hergestellt werden.

13. Verfahren nach Anspruch 12,
**dadurch gekennzeichnet, dass**
in einem vierten Verfahrensschritt das Deckelteil (1) durch Gießen hergestellt wird,
in einem fünften Verfahrensschritt ein Stempelwerkzeug in Lageraufnahmen (4, 5, 6) des Deckelteils (1) eingepresst wird, so dass Lagersitze passgenau hergestellt werden.

## Claims

1. Drive comprising an electric motor and a gearing,
the casing of the gearing having a casing part (40) and a lid part (1), which in particular are interconnected,
the casing part (40) having bearing receptacles (4, 5, 6), a respective bearing seat being provided in each bearing receptacle (4, 5, 6),
planar bearing-surface regions (20), which are aligned with one another, being shaped on the side of the casing part (40) facing away from the bearing seat, i.e. the outside,
the bearing-surface regions (20) being arranged in a common plane,
the casing part (40) being a cast part,
the electric motor having a rotor shaft (91) and a motor casing (41),
the rotor shaft (91) being rotatably mounted in the motor casing (41) by means of at least one bearing (47),
an adapter flange (43) being connected to the motor casing (41) for conjoint rotation,
**characterised in that**
each bearing seat is discontinuous in the circumferential direction,
a bayonet guide region (61) being formed on the casing part (40),
the axial width of the bayonet guide region (61) increasing in the circumferential direction,
the adapter flange (43) having a lug region (92), in particular a bayonet lug, for engaging behind the bayonet guide region (61).

2. Drive according to claim 1,
**characterised in that**
the lid part (1) has bearing receptacles (4, 5, 6), a respective bearing seat being provided in each bearing receptacle (4, 5, 6),
planar bearing-surface regions (20) being shaped on the side of the lid part (1) facing away from the bearing seat.

3. Drive according to either claim 1 or claim 2,
**characterised in that**
a respective bearing (47) is received in each bearing seat with an exact fit.

4. Drive according to at least one of the preceding claims,
**characterised in that**
the bayonet guide region (61) protrudes into a recess (60) of the casing part (40),
the bayonet guide region (61) covering a radial-distance region that is encompassed by the radial-distance region covered by the lug region (92),
the circumferential angular range covered by the bayonet guide region (61) being smaller than the circumferential angular range covered by the recess (60),
the circumferential angular range covered by the lug region (92) being smaller in terms of magnitude than the difference between the circumferential angular range covered by the recess (60) and the circumferential angular range covered by the bayonet guide region (61).

5. Drive according to claim 4,
**characterised in that**
the lug region (92) can be inserted axially into the recess (60) and engages behind the bayonet guide region (61) as a result of rotation.

6. Drive according to at least one of the preceding claims,
**characterised in that**
the axial width of the bayonet guide region (61) increases in the circumferential direction
- such that the lug region (92) formed on the adapter flange (43) is axially displaced by the bayonet guide region (61) upon rotation in the circumferential direction
- or such that the adapter flange (43) is pushed in the circumferential direction towards the casing part (40) when the adapter flange (43) is rotated relative to the casing part (40).

7. Drive according to at least one of the preceding claims,
**characterised in that**
the recess (60) is delimited in the circumferential direction by a retaining rib (2) which extends in the radial direction from a bearing receptacle (4, 5, 6) of the bearing (47) of the input shaft,
or **in that**
the recess (60) is delimited in the opposite direction to the circumferential direction by a further retaining rib (2) which extends in the radial direction from a bearing receptacle (4, 5, 6) of the bearing (47) of the input shaft,
the bayonet guide region (61), the further retaining rib (2) and the bearing receptacle (4, 5, 6) being formed in one piece.

8. Drive according to at least one of the preceding claims,
**characterised in that**
a resiliently deformed seal is arranged at the bottom of the cup-shaped bearing receptacle (4, 5, 6) between the bearing receptacle (4, 5, 6) and the bearing (47) received therein, ridge regions (7, 90) projecting axially on the bottom of the bearing receptacle (4, 5, 6), the bearing (47) abutting said ridge regions such that the deformation of the seal is limited by means of the ridge regions (7, 90),
the resiliently deformed seal pushing the bearing (47) against a step shaped on the input shaft.

9. Drive according to at least one of the preceding claims,
**characterised in that**
the lid part (1) likewise has cup-shaped bearing receptacles (4, 5, 6),
retaining ribs extending from each bearing receptacle (4, 5, 6) towards a circumferential edge region of the lid part (1),
axially projecting ridge regions (7, 90) being shaped on the bottom of each cup-shaped bearing receptacle (4, 5, 6) and limiting the resilient deformation of a respective seal.

10. Drive according to at least one of the preceding claims,
**characterised in that**
a bolt supported on the casing part (40) is arranged in a recess (60) of the casing part (40) and is pushed towards the adapter flange (43) by a spring element,
or **in that**
a bolt supported on the adapter flange (43) is arranged in a recess (60) of the adapter flange (43) and is pushed towards the casing part (40) by a spring element.

11. Drive according to at least one of the preceding claims,
**characterised in that**
ridge regions (7, 90) projecting axially towards the casing part (40) are shaped on the adapter flange (43) and each protrude into respective annular grooves of the casing part (40) and thus act as a guide when the adapter flange (43) moves in rotation relative to the casing part (40),
the radial-distance region covered by each ridge region (7, 90) being independent of the circumferential angle.

12. Method for producing a drive according to at least one of the preceding claims,
the drive comprising a gearing that has a casing part (40) and a lid part (1),
the casing part (40) being produced by casting in a first method step,
**characterised in that**
in a second method step, a punch tool is pressed into bearing receptacles (4, 5, 6) of the casing part (40) such that bearing seats are produced with an exact fit.

13. Method according to claim 12,
**characterised in that**
in a fourth method step, the lid part (1) is produced by casting,
in a fifth method step, a punch tool is pressed into bearing receptacles (4, 5, 6) of the lid part (1) such that bearing seats are produced with an exact fit.

## Revendications

1. Entraînement, comprenant un moteur électrique et une transmission,
dans lequel le carter de la transmission présente une partie carter (40) et une partie couvercle (1) qui sont en particulier reliées l'une à l'autre,
dans lequel la partie carter (40) présente des logements de palier (4, 5, 6), dans lequel un siège de palier est prévu dans chaque logement de palier (4, 5, 6),
dans lequel des zones formant surface d'appui (20) planes et en alignement les unes avec les autres sont formées sur le côté opposé au siège de palier, c'est-à-dire le côté extérieur, de la partie carter (40),
dans lequel les zones formant surface d'appui (20) sont disposées dans un plan commun,
dans lequel la partie carter (40) est une pièce moulée,
dans lequel le moteur électrique présente un arbre de rotor (91) et un carter de moteur (41),
dans lequel l'arbre de rotor (91) est monté de manière rotative dans le carter de moteur (41) au moyen d'au moins un palier (47),
dans lequel une bride d'adaptation (43) est reliée de manière solidaire en rotation au carter de moteur (41),
**caractérisé en ce**
**que** le siège de palier respectif est réalisé interrompu dans la direction circonférentielle,
dans lequel une zone de guidage à baïonnette (61) est formée sur la partie carter (40),
dans lequel la largeur axiale de la zone de guidage à baïonnette (61) augmente dans la direction circonférentielle,
dans lequel la bride d'adaptation (43) présente une zone formant languette (92), en particulier un ergot de baïonnette, destinée à s'engager derrière la zone de guidage à baïonnette (61).

2. Entraînement selon la revendication 1,
**caractérisé en ce**
**que** la partie couvercle (1) présente des logements de palier (4, 5, 6), un siège de palier respectif étant prévu dans chaque logement de palier (4, 5, 6),
dans lequel des zones formant surface d'appui planes (20) sont formées sur le côté de la partie couvercle (1) opposé au siège de palier.

3. Entraînement selon la revendication 1 ou 2,
**caractérisé en ce**
**qu'**un palier respectif (47) est reçu de manière précisément ajustée dans le siège de palier respectif.

4. Entraînement selon au moins l'une des revendications précédentes,
**caractérisé en ce**
**que** la zone de guidage à baïonnette (61) fait saillie dans un évidement (60) de la partie carter (40), la zone de guidage à baïonnette (61) couvrant une plage de distance radiale qui est comprise par la plage de distance radiale couverte par la zone formant languette (92),
dans lequel la plage angulaire circonférentielle couverte par la zone de guidage à baïonnette (61) est plus petite que la plage angulaire circonférentielle couverte par l'évidement (60),
dans lequel la plage angulaire circonférentielle couverte par la zone formant languette (92) est plus petite en valeur que la différence de la plage angulaire circonférentielle couverte par l'évidement (60) et de la plage angulaire circonférentielle couverte par la zone de guidage à baïonnette (61).

5. Entraînement selon la revendication 4,
**caractérisé en ce**
**que** la zone formant languette (92) peut être introduite axialement dans l'évidement (60) et s'engage par rotation derrière la zone de guidage à baïonnette (61).

6. Entraînement selon au moins l'une des revendications précédentes,
**caractérisé en ce**
**que** la largeur axiale de la zone de guidage à baïonnette (61) augmente dans la direction circonférentielle,
- de sorte que la zone formant languette (92) formée sur la bride d'adaptation (43) est déplacée axialement de la zone de guidage à baïonnette (61) lors de la rotation dans la direction circonférentielle,
- ou que la bride d'adaptation (43) est pressée vers la partie carter (40) lors de la rotation de la bride d'adaptation (43) dans la direction circonférentielle par rapport à la partie carter (40).

7. Entraînement selon au moins l'une des revendications précédentes,
**caractérisé en ce**
**que** l'évidement (60) est limité dans la direction circonférentielle par une entretoise de maintien (2) qui s'étend dans la direction radiale à partir d'un logement de palier (4, 5, 6) du palier (47) de l'arbre d'entrée,
ou que l'évidement (60) est limité à l'encontre de la direction circonférentielle par une autre entretoise de maintien (2) qui s'étend dans la direction radiale à partir d'un logement de palier (4, 5, 6) du palier (47) de l'arbre d'entrée,
dans lequel la zone de guidage à baïonnette (61), l'autre entretoise de maintien (2) et le logement de palier (4, 5, 6) sont réalisés en une seule pièce.

8. Entraînement selon au moins l'une des revendications précédentes,
**caractérisé en ce**
**qu'**un joint déformé élastiquement est disposé sur le fond du logement de palier en forme de pot (4, 5, 6) entre le logement de palier (4, 5, 6) et le palier (47) qui y est logé,
dans lequel des zones formant nervure (7, 90) font saillie axialement sur le fond du logement de palier (4, 5, 6), contre lesquelles le palier (47) s'appuie, de sorte que la déformation du joint est limitée au moyen des zones formant nervure (7, 90),
dans lequel le joint déformé élastiquement presse le palier (47) contre un gradin formé sur l'arbre d'entrée.

9. Entraînement selon au moins l'une des revendications précédentes,
**caractérisé en ce**
**que** la partie couvercle (1) présente également des logements de palier (4, 5, 6) réalisés en forme de pot,
dans lequel des entretoises de maintien s'étendent du logement de palier respectif (4, 5, 6) à une zone de bord circonférentielle de la partie couvercle (1),
dans lequel des zones formant nervure (7, 90) faisant saillie axialement sont formées sur le fond respectif du logement de palier en forme de pot (4, 5, 6), lesquelles limitent la déformation élastique d'un joint respectif.

10. Entraînement selon au moins l'une des revendications précédentes,
**caractérisé en ce**
**qu'**un goujon s'appuyant sur la partie carter (40) est disposé dans un évidement (60) de la partie carter (40) et est pressé vers la bride d'adaptation (43) par un élément ressort,
ou qu'un goujon s'appuyant sur la bride d'adaptation (43) est disposé dans un évidement (60) de la bride d'adaptation (43) et est pressé vers la partie carter (40) par un élément ressort.

11. Entraînement selon au moins l'une des revendications précédentes,
**caractérisé en ce**
**que** des zones formant nervure (7, 90) faisant saillie axialement vers la partie carter (40) sont formées sur la bride d'adaptation (43), lesquelles font chacune saillie dans une rainure annulaire respective de la partie carter (40) et servent ainsi de guide lors du mouvement de rotation de la bride d'adaptation (43) par rapport à la partie carter (40),
dans lequel la plage de distance radiale couverte par la zone formant nervure respective (7, 90) est indépendante de l'angle circonférentiel.

12. Procédé de fabrication d'un entraînement selon au moins l'une des revendications précédentes,
dans lequel l'entraînement présente une transmission avec une partie carter (40) et une partie couvercle (1),
dans une première étape du procédé, la partie carter (40) est fabriquée par moulage,
**caractérisé en ce que**,
dans une deuxième étape du procédé, un outil de poinçonnage est enfoncé dans des logements de palier (4, 5, 6) de la partie carter (40), de sorte que des sièges de palier sont produits de manière précisément ajustée.

13. Procédé selon la revendication 12,
**caractérisé en ce que**,
dans une quatrième étape du procédé, la partie couvercle (1) est fabriquée par moulage,
dans une cinquième étape du procédé, un outil de poinçonnage est enfoncé dans des logements de palier (4, 5, 6) de la partie couvercle (1), de sorte que des sièges de palier sont produits de manière précisément ajustée.
